# EUROPÄISCHE PATENTSCHRIFT

(11) **EP 0 367 972 B1**
(45) Veröffentlichungstag und Bekanntmachung des Hinweises auf die Patenterteilung: **24.11.1993**
(21) Anmeldenummer: 89117995.4
(22) Anmeldetag: 28.09.1989
(51) Int. Cl.: B61C 11/00, B61C 13/04, B61B 13/00

(54) **Transportvorrichtung für Werkstücke**
Transport device for work pieces
Dispositif de transport pour pièces d'usinage

(30) Priorität: 11.10.1988 DE 3834583
(43) Veröffentlichungstag der Anmeldung: 16.05.1990
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Sturies, Herbert

(56) Entgegenhaltungen:
- EP-A- 0 116 021
- DE-A- 2 162 738
- DE-A- 3 309 377
- FR-A- 2 478 046
- GB-A- 1 354 650

## Beschreibung

Die Erfindung bezieht sich auf eine Transportvorrichtung für Werkstücke, mit Schienen für Wagen, die auf der Schiene abstützende, quer zur Wagenlaufrichtung mit Abstand voneinander angeordnete Schienenlaufrollen haben und die von ihrem fernsteuerbaren Antriebsmotor bewegbar sind, der zwei an Antriebsformschlußelementen der Schiene in Bewegungsrichtung formschlüssig angreifende Antriebsräder beaufschlagt, wobei zumindest im Verzweigungsbereich von Schienenweichen jeweils ein den Wagen allein in eine der Weichenrichtungen längsführender starrer Schienenabschnitt vorhanden ist, wobei der Wagen zwei einander an unterschiedlichen Wagenseiten gegenüberliegende Führungselemente hat, die wechselweise vertikal in Eingriff mit Führungsteilen einander entsprechend gegenüberliegender Schienenabschnitte zu bringen sind, wobei die beiden Antriebsräder des Wagens im Verzweigungsbereich von Schienenweichen entsprechend den Führungselementen mit der Schiene in Antriebseingriff gelangen.

Transportvorrichtungen für Werkstücke haben üblicherweise Wagen, die mit einem fernsteuerbaren Antriebsmotor auf Schienen bewegt werden, die im Verzweigungsbereich Schienenweichen mit steuerbaren Elementen aufweisen. Der vergleichsweise hohe Bau- und Ansteuerungsaufwand dieser Schienen ist jedoch unerwünscht.

Aus der FR-A-24 78 046 ist eine Transportvorrichtung mit den eingangs genannten Merkmalen bekannt. Bei der bekannten Transportvorrichtung ist der Wagen ein Zugwagen, der nicht selbst die Last trägt, sondern diese auf einem bodenlaufenden Last-Wagen hinterherzieht. Dabei wird die Schiene von den Führungselementen des Zugwagens außen umklammert. Außerdem baut die Transportvorrichtung quer zur Schiene groß, damit zwischen ihnen die beiden Antriebsräder Platz haben. Beide Antriebsräder sind außerhalb des Schienenprofils angeordnet, so daß die Transportvorrichtung auch deswegen quer zur Schiene groß baut. Desweiteren muß der bei der bekannten Transportvorrichtung zwangsweise vorhandene Antriebseingriff der Antriebsräder in die Verzahnungen der Schiene auf besondere Weise gelöst werden, da dieser Eingriff - außer durch eine Veränderung der Position des Wagens an der Schiene - nicht beeinflußbar ist.

Demgegenüber liegt daher der Erfindung die Aufgabe zugrunde, eine Transportvorrichtung mit den vorgenannten Merkmalen so zu verbessern, daß sie bei Beibehaltung der passiven Ausbildung der Schienen - also Schienen ohne anzusteuernde Elemente - im Querschnitt klein baut und ihre Antriebsräder bedarfsweise in den gewünschten Antriebseingriff steuerbar sind.

Diese Aufgabe wird dadurch gelöst, daß die Führungselemente und die Antriebsräder mit etwa gleichen Abstand voneinander angeordnet und beide in vertikal über ihnen angeordnete Führungsteile und Antriebsformschlußelemente steuerbar sind.

Die Schienenweichen haben für jede der Weicheneinrichtungen einen Schienenabschnitt, der starr ist und somit allein die Führung des Wagens in die betreffende Weichenrichtung übernehmen kann. Die Entscheidung, welche der Weichenrichtungen für den Wagen maßgeblich ist, wird durch eine Steuerung getroffen, dergemäß ein Führungselement des Wagens wahlweise in eine der längsführenden Schienenabschnitte eingreifen kann. Der Wagen der Transportvorrichtung hat also alle mechanischen Mittel an Bord, um wahlweise in unterschiedliche Weichenrichtungen fahren zu können.

Bei dem passiv ausgebildeten Schienensystem liegen Fehlermöglichkeiten allenfalls beim Wagen. Dieser kann im Störfall entnommen werden, ohne daß dadurch eine Störung im Produktionsablauf auftritt, weil der gestörte Wagen schnell ersetzt und das intakte Schienensystem weiter benutzt werden kann. Eine etwaige Reparatur des Wagens braucht auch nicht an Ort und Stelle vorgenommen zu werden, sondern der Wagen kann eingeschickt werden, was den Repraraturdienst wesentlich vion zeitaufwendigen Reisen zum Transportsystem entlastet. Darüber hinaus kann das Schienensystem für alle Einsatzzwecke ausgebildet werdedn, also acuh für z.B. hochwärmebelastete Transportvorrichtungen, so daß auch beispielsweise Weichen mit hohen Produktionszahlen und infolgedesen geringen Stückkosten hergestellt werden können. Ein weiterer Vorteil ist es, daß der Wagen unabhängig von dem Einsatz des Schienensystems den jeweiligen gegebenen Anforderungen entsprechend ausgebildet werden kann.

Darüber hinaus kann die Transportvorrichtung auch außerhalb des Verzweigungsbereichs von Schienenweichen durch Steuerung des Führungselements eines Wagens wahlweise in einen längsführenden starren Schienenabschnitt eingreifen und es versteht sich, daß auf einer geraden Schienenstecke auch alle Antriebsräder in die vorhandenen Schienenabschnitte eingreifen können, beispielsweise um größere Antriebskräfte bei geringerer Beanspruchung der Antriebselemente übertragen zu können. Wesentlich ist, daß die Schienenweichen ein- oder mehrstückige Formstücke sind, deren Teile zum Bewegen des Wagens in unterschiedliche Laufrichtungen nicht bewegt werden müssen.

Die Ausbildung des Wagens mit zwei Führungselementen ermöglicht deren vereinfachte Ausbildung die die Verwendung von Antriebsrädern, die im Verzweigungsbereich von Schienenweichen wie die Führungselemente umzusteuern sind, was es erlaubr, den mechanischen Teil der Umsteuereinrichtung entsprechend einfach auszubilden.

Dadurch, daß zumindest im Verzweigungsbereich von Schienenweichen zwei jeweils in eine Weichenrichtung längsführende Schienenabschnitte vorhanden sind, und daß der Wagen minestens ein wahlweise in einen der längsführenden Schienenabschnitte einfreifendes Führungselement aufweist, wird eine Entlastung der Antriebsräder von Abstützaufgaben für den Wagen und seine Last erreicht, sowie zugleich eine wenig raumaufwendige Anordnung der Laufrollen, der Führungselemente und der Antriebsräder zusammen mit den Führungsteilen und Antriebsformschlußelementen in zwei einander parallelen vertikalen Ebenen, die zwischen sich Raum für die Anordnung des Antriebsmotors und der weiteren mechanischen Bauteile des Wagens für den Eingriff der Führungselemente und der Antriebsräder in die mit diesen zusammenwirkenden Führungsteile und Antriebsformschlußelemente erlaubt.

Wenn der Wagen vier Rollen und vier in deren Nähe angeordnete Führungselemente aufweist und zwischen zwei Rollen oder Führungselementen je ein Antriebsrad quer zur Wagenlaufrichtung verschieblich angeordnet ist, ist der Wagen der Vorrichtung in einfacher Weise auch für Kurvenfahrten mit geringem Radius geeignet, weil die Rollen durch die Führungselemente genau geführt sind und das Antriebsrad die erforderlichen Ausweichbewegungen machen kann.

Ein kompaktes und damit im inneren des Wagens zwischen dessen Rädern, Rollen und Führungselementen gut unterzubringendes Antriebsaggregat wird dadurch bedingt, daß die Antriebsräder eine gemeinsame Antriebswelle haben, die von dem Antriebsmotor drehantreibbar und damit schwenkfest verbunden ist, daß der Antriebsmotor von einer in Wagenlaufrichtung angeordneten verschwenkbaren und/oder vertikal beweglichen Lagerwelle gehalten ist, und daß der Antriebsmotor von einem wagengehäusefesten Stellmotor verlagerbar ist. Der Antriebsmotor bildet mit der Antriebswelle der Antriebsräder eine gemeinsam verstellbare Einheit, die quer zur Wagenlaufrichtung verschwenkbar und auch vertikal beweglich ist um die Eingriffsbewegungen der Antriebsräder und/oder der Führungselemente zu erreichen.

Die Verlagerung des Antriebsmotors durch einen Stellmotor wird mittels mechanischer Bauelemente dadurch erreicht, daß zur Verlagerung des Antriebsmotors eine dem Eingriff des Stellmotors dienende Steuerkulisse vorhanden ist, deren Form die Steuerung des Eingriffs der Antriebsräder und Führungselemente in die Schiene auf beiden Seiten oder wechselweise auf nur einer Seite oder das Ausrücken aller Antriebsräder und Führungselemente erlaubt. Die Steuerkulisse ist ein besonders einfaches mechanisches Mittel, um das erforderliche Eingreifen und Ausrücken der Antriebsräder und Führungselemente zu erreichen.

Da die Lagerwelle auch vertikal beweglich sein muß, ist die Vorrichtung zweckmäßigerweise so ausgebildet, daß die den Antriebsmotor haltende Lagerwelle an zwei federnd abgestützten Schwingen befestigt ist, die an einer im Wagengehäuse verdrehbaren, parallel zur Lagerwelle angeordneten Schwingenwelle angebracht sind.

Es ist eine die Stellung der Lagerwelle zu beeinflussen erlaubende Handverstelleinrichtung vorhanden, die das Ausrücken aller Antriebsräder und Führungselemente gestattet. Mit dieser Handverstelleinrichtung kann im Störfall erreicht werden, daß der Wagen frei von jeder Einflußnahme der Antriebsräder und der Führungselemente auf der Schiene bewegt werden kann, nämlich an eine Stelle, die seine Entnahme ermöglicht.

Besonders vorteilhaft ist es, daß der Wagen einen auswechselbaren Werkstückträger und eine damit zusammenwirkende Trägerverriegelungseinrichtung hat, die von dem Stellmotor betätigbar ist. Es können daher gleich ausgebildete Wagen für unterschiedlich gestaltete Werkstücke verwendet werden, indem Werkstuckträger verwendet werden, die alle zur Aufnahme unterschiedlicher Lasten geeignet sind, wagenanschlußseitig jedoch gleich ausgebildet sind. Darüber hinaus ergibt sich durch die Verwendung von Werkstückträgern der Vorteil, daß das Werkstück stets in vorbestimmter Lage zum Wagen ist, weil der Werkstückträger so ausgebildet werden kann, daß sein Werkstück nur in einer einzigen vorbestimmten Lage zu transportieren ist. Dabei gewährleistet die Trägerverriegelungseinrichtung, daß der Werkstückträger in seiner vorbestimmten Lage auf dem Wagen auch während des Transports festgehalten ist. Für die Trägerverriegelungseinrichtung wird kein besonderer Antrieb benötigt, da die Betätigung durch den Stellmotor erfolgt, der auch den Antriebsmotor verlagert.

Eine vergleichsweise einfache bauliche Ausgestaltung ergibt sich für die Betätigung der Trägerverriegelungseinrichtung durch den Stellmotor dadurch, daß eine von dem Stellmotor angetriebene Steuerplatte vorhanden ist, die einen die Verriegelungseinrichtung außer Eingriff mit dem Werkstückträger bringenden Steuerhebel entgegen einer Federkraft zu betätigen vermag. Raumsparend und funktionssicher kann die Vorrichtung weiterhin dadurch ausgestaltet werden, daß der Exzenter für die Steuerplatte mit einem der Verlagerung des Antriebsmotors mittels einer Steuerkulisse dienenden Kulissenbolzen starr verbunden ist.

Um im Falle eines Hindernisses für die Bewegung des Wagens auf den Schienen eine abrupte Unterbrechung der Bewegung des Wagens zu vermeiden, ist die Vorrichtung so ausgebildet, daß der Wagen in seinen Laufrichtungen beidendig mit am Wagengehäuse relativverschieblichen Stoßstangenholmen versehen ist, die bei ihrem Auflaufen auf ein Hindernis einen vorbestimmt langen abgefederten Wagenauslauf bei abgeschaltetem oder umgepoltem Antriebsmotor zulassen. Die der Abfederung des Wagens dienenden Federn vermögen den Wagen nach dessen Abfederung wieder zurückzuschieben.

Die Schiene weist als Antriebsformschlußelement vertikal nach unten offene gezahnte Formschlußriemen für den Eingriff entsprechend gezahnter Antriebsräder auf, so daß in Laufrichtung der Antriebsräder ein wirksamer Formschluß gegeben ist. Dieser ermöglicht einen schlupffreien Antrieb des Wagens sowie dessen genaue Positionierung über eine zentrale Steuereinheit, indem beispielsweise dem Wagen vorgegeben wird, sich solange in einer bestimmten Richtung zu bewegen, bis ein Geber einer Meßeinrichtung eine vorgegebene Zähnezahl ermittelt hat. Z.B. dadurch ist eine sehr genaue Wagenpositionierung ohne von außen erfolgende Messung der Wagenposition möglich.

Eine querschnittsgünstige Gestaltung für die Schiene ergibt sich dadurch, daß sie im Weichenbereich im Querschnitt aus zwei vertikalen, im wesentlichen C-förmigen Profilstücken besteht, zwischen denen das Wagengehäuse angeordnet ist, dessen es abstützende Rollen auf den unteren Querschenkeln laufen, und daß die oberen Querschenkel als Führungsrippen ausgebildete Führungsteile für als Führungsrollen ausgebildete Führungselemente haben und an ihren Unterseiten die Antriebsformschlußelemente für die Antriebsräder aufweisen. Eine derart gestaltete Schiene umfaßt den Wagen unten und auf beiden Seiten im Sinne einer sicheren Halterung und Abschirmung des Wagens gegen dessen Berührung mit Gegenständen, die im Bereich der Transportvorrichtung bewegt werden.

Außerdem gestattet eine solche Gestaltung des Querschnitts der Schiene günstige Weiterbildungen, beispielsweise wenn zwischen den unteren Querschenkeln der Profilstücke an diesen festgelegte Isolationsprofile mit davon getragenen Stromschienen angeordnet sind, an denen Stromabnehmer des Wagens schleifend angreifen. Die Isolationsprofile fügen sich in den Querschnitt der Schiene ein, indem sie praktisch den Boden bilden. Hierzu sind sie zweckmäßigerweise wagengehäuseseitig durchgehend glatt und mit vertikal durchgehenden Stromabnehmereingriffsschlitzen versehen, die einen seitlichen Zugang zu den Stromschienen gestatten, so daß etwa auf das Innere der Schiene gelangende Kleinteile oder geringere Verschmutzungen durch die Schlitze hindurchfallen können bzw. durch diese bei Wagenbewegung abgeräumt werden können. Die Isolationsprofile können auch parallel zu den Stromschienen verlaufende Steuerleitungen aufweisen ohne dadurch den Querschnitt der Schiene zu verändern.

In Ausgestaltung der Erfindung weisen die C-förmigen Profilstücke in ihren wagenabgewendeten Außenflächen hinterschnittene, längs durchlaufende Befestigungsnuten auf, die eine einfache Verbindung weiterer Teile mit der Schiene ermöglichen, beispielsweise Teile zum Verbinden der C-förmigen Profilstücke. Es können aber auch von den C-förmigen Profilstücken getragene Bauteile außen befestigt werden, sofern sie den Wagenlauf nicht behindern.

Die vorgenannten Merkmale sind Insbesondere dann von Bedeutung für die Vorrichtung, wenn die Schienen aus stumpf gestoßenen Stücken bestehen und im Stoßbereich an den Befestigungsnuten festlegbare Verbindungsplatten vorhanden sind, die die Stromschienen- und Steuerleitungsenden miteinander verbindende Kontaktgeber haben. In diesem Falle dienen die Verbindungsplatten nicht nur der Kontaktgabe zwischen den Stromschienen- und Steuerleitungsenden, sondern zugleich auch der mechanischen Stabilisierung der Schienenstücke, wobei diese Stabilisierung so stark sein kann, daß sich weitere Abstützelemente für die Schiene erübrigen.

Die Vorrichtung kann dadurch vereinfacht werden, daß die beiden C-förmigen Profilstücke der Schienenweichen zur Längsführung der Wagen jeweils in eine der beiden Weichenrichtungen verlaufen, und/oder daß außerhalb der Weichenbereiche nur in Bereichen einer Antriebsradumschaltung und/oder einer Stromschienenumschaltung auf beiden längsführenden Schienenabschnitten Antriebsformschlußelemente vorhanden sind. Bei einem Auseinanderlaufen der C-förmigen Profilstücke im Bereich der Schienenweichen versteht sich, daß der Wagen auch weiterhin auf beiden Seiten abgestützt sein muß und die Weichen daher Rollenabstützbereiche aufweisen müssen. Ein solcher Boden der Weichen kann die Profilstücke im Weichenbereich zu einem Bauteil zusammenfassen. Außerhalb der Weichenbereiche ist es möglich, daß der Eingriff der Antriebsräder nur auf einer Wagenseite erfolgt, so daß die andere Wagenseite keiner Längsführungs- und Antriebselemente bedarf.

Zweckmäßigerweise sind für jede Stromschiene zwei Stromabnehmer vorhanden, die einen den Unterbrechungsabstand der Stromschienen im Verzweigungsbereich einer Weiche überbrückenden Abstand voneinander haben und einander parallel an die Klemmen der Motoren angeschlossen sind. Infolgedessen ist der Wagen beim Durchfahren der Weiche in der Lage, ohne Unterbrechung seiner Bewegung durchzufahren, weil die parallelen Stromabnehmer stets für die erforderliche elektrische Einspeisung in die Motoren sorgen.

Die Erfindung wird anhand eines in der Zeichnung dargestellten Ausführungsbeispiels näher erläutert. Es zeigt:
- Fig. 1: den mit 1-1 gekennzeichneten Querschnitt der Fig.4 durch einen Wagen und eine Schiene,
- Fig. 1a: die Ansicht A einer z. B. in Fig.6 dargestellten Steuerplatte mit einer Steuerkulisse einer Kopfplatte eines Antriebsmotors,
- Fig. 2: den mit 2-2 gekennzeichneten Schnitt der Fig.4,
- Fig. 3: den mit 3-3 gekennzeichneten Schnitt der Fig.4,
- Fig. 4: einen Horizontalschnitt durch einen Wagen und eine Schiene, im wesentlichen im Bereich des Wagengehäuses,
- Fig. 4a: eine teilweise geschnittene Aufsicht auf einen Wagen,
- Fig. 4b: eine teilweise geschnittene Aufsicht auf einen Wagen im Verzweigungsbereich einen Schienenweiche,
- Fig. 5: einen Detailquerschnitt im Bereich einer Werkstückträgerverriegelung eines Wagens,
- Fig. 5a: eine etwas abgeänderte, vergrößerte Darstellung des Details D der Fig.5,
- Fig. 6: einen Vertikalschnitt durch einen Wagen, gemäß 6-6 der Fig.4, und
- Fig. 7: einen Schienenplan.

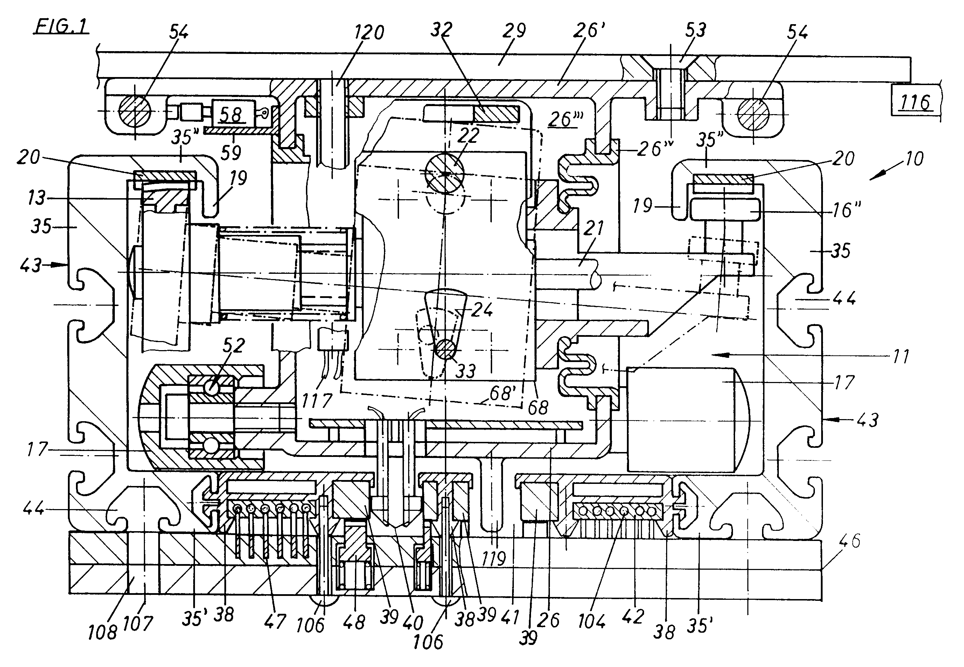

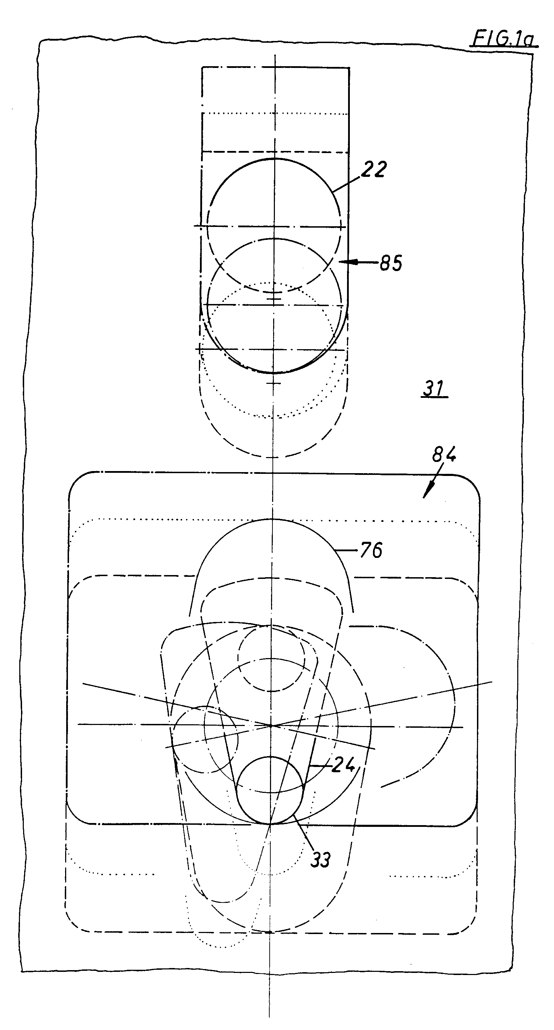

Der aus Fig.1 ersichtliche Querschnitt der Schiene 10 der Transportvorrichtung mit einem Wagen 11 besteht im wesentlichen aus zwei einander zugewendeten C-förmigen Profilstücken 35, die auf gleicher Höhe angeordnet sind, so daß ihre unteren Querschenkel 35' und ihre oberen Querschenkel 35'' einander auf gleicher Höhe gegenüberliegen. Zwischen den unteren Querschenkeln 35' sind daran festgelegte Isolationsprofile 38 mit davon getragenen Stromschienen 39 vorhanden, an denen Stromabnehmer 40 des Wagens 11 schleifend angreifen und diesen mit der zu seiner Bewegung erforderlichen Energie und den ebenfalls erforderlichen Steuerbefehlen versorgen.

Die dem Wagen 11 zugeführte elektrische Energie wird vom Antriebsmotor 12 als Drehmoment über ein Getriebe 51 auf eine Antriebswelle 21 gegeben, die quer zur Wagenlaufrichtung 18 angeordnet ist und an ihren äußeren Enden Antriebsräder 13 aufweist, die in Antriebsformschlußelemente 20 der Schiene 10 eingreifen können und den Wagen 11 je nach Drehrichtung der Antriebswelle 21 in Wagenlaufrichtung 18 oder in entgegengesetzter Richtung bewegen.

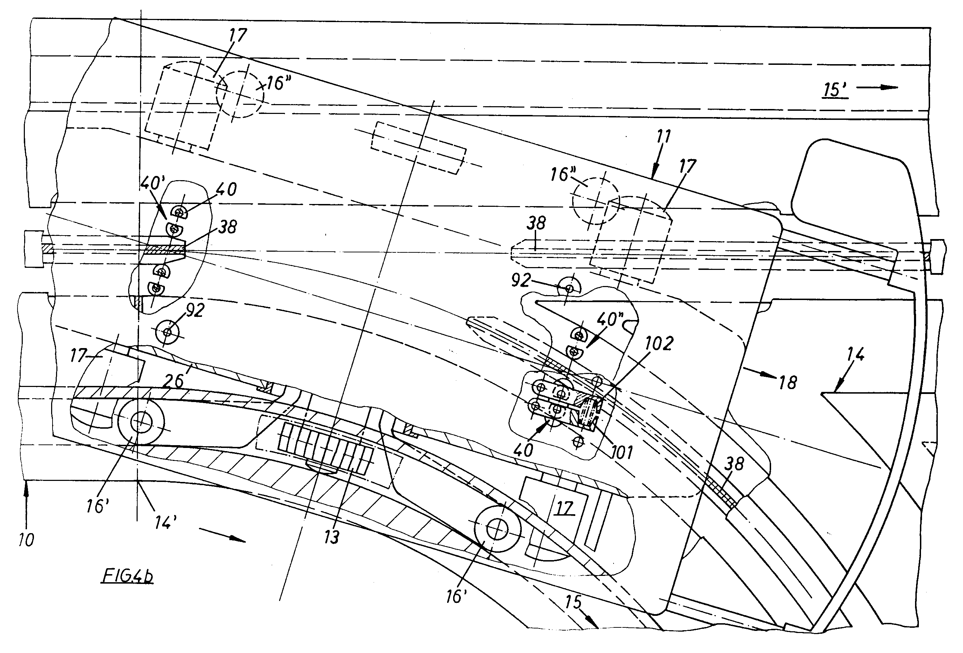

Der Antriebsmotor 12 ist innerhalb eines Wagengehäuses 26 untergebracht, das sich mit gemäß Fig.4b vier Rollen 17 auf der Schiene 10 abstützt. Die Rollen 17 sind mit dem Gehäuse 26 über Wälzlager 52 gemäß Fig.1 zusammengebaut. Die Rollen 17 stützen sich auf den unteren Querschenkeln 35' ab.

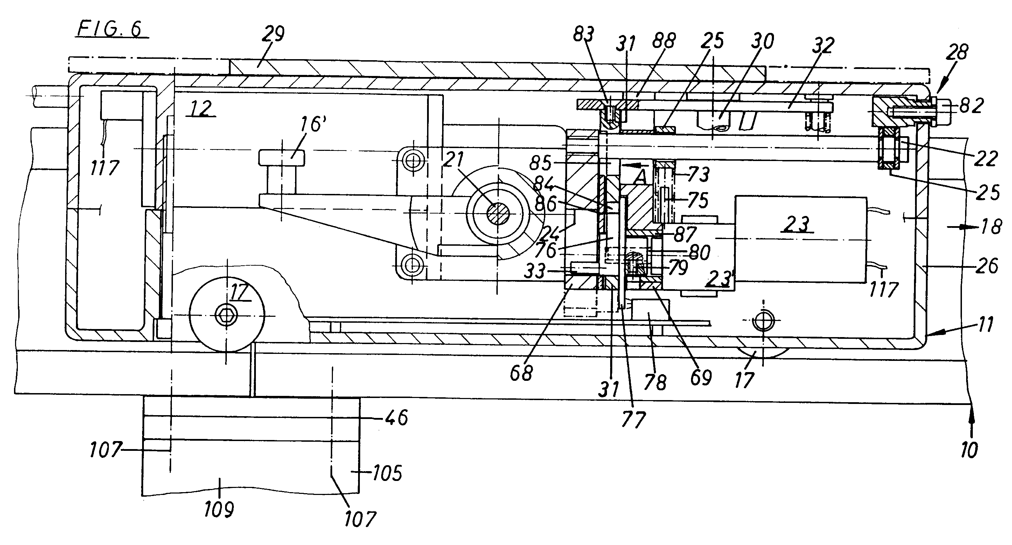

Der Wagen 11 hat ein gemäß Fig.4, 6 etwa quaderförmiges Gehäuse 26, in dem außer dem Antriebsmotor 12 und dessen Getriebe 51 alle weiteren zum Antrieb und zur Steuerung des Wagens 11 erforderliche Bauteile untergebracht sind. Das Wagengehäuse 26 füllt im wesentlichen den zwischen den C-förmigen Profilstücken 35 vorhandenen lichten Raum querschnittsmäßig aus und ragt mit einem Gehäuseoberteil 26' darüberhinaus, wo es einen Werkstuckträger 29 aufweist. Dieser Werkstückträger 29 ist mit dem Gehäuseoberteil 26' beispielsweise verschraubt, eine Befestigungsschraube 53 ist in Fig.1 beispielsweise dargestellt. Das Gehäuseoberteil 26' hält an seinen Längsseiten oberhalb der Schiene 10 Gleitstangen 54, an deren Enden Stoßstangenholme 34 gemäß Fig.4a vorgesehen sind. Das Gehäuse 26 stützt sich mit einem Bund 55 über eine Feder 56 an einem Ringbund der Stange 57 ab. Außerdem ist am Wagengehäuse 26 ein Endschalter 58 gemäß Fig.1 mit einem Haltewinkel 59 befestigt, der von einem auf einer Stange 54 fest angebrachten Betätigungsnocken 60 zu betätigen ist. Trifft der Wagen 11 bzw. sein z. B. rechter Stoßstangenholm 34 in Wagenlaufrichtung 18 auf ein Hindernis, so steht der Holm 34 abrupt still, das Wagengehäuse 26 fährt in Laufrichtung jedoch noch weiter, so daß der Endschalter 58 betätigt und dadurch der Antriebsmotor 12 stillgesetzt wird. Es erfolgt dann eine Abfederung der Masse des Wagens 11 und seiner Last über die Feder 56, wobei für eine geeignete Dämpfung gesorgt ist.

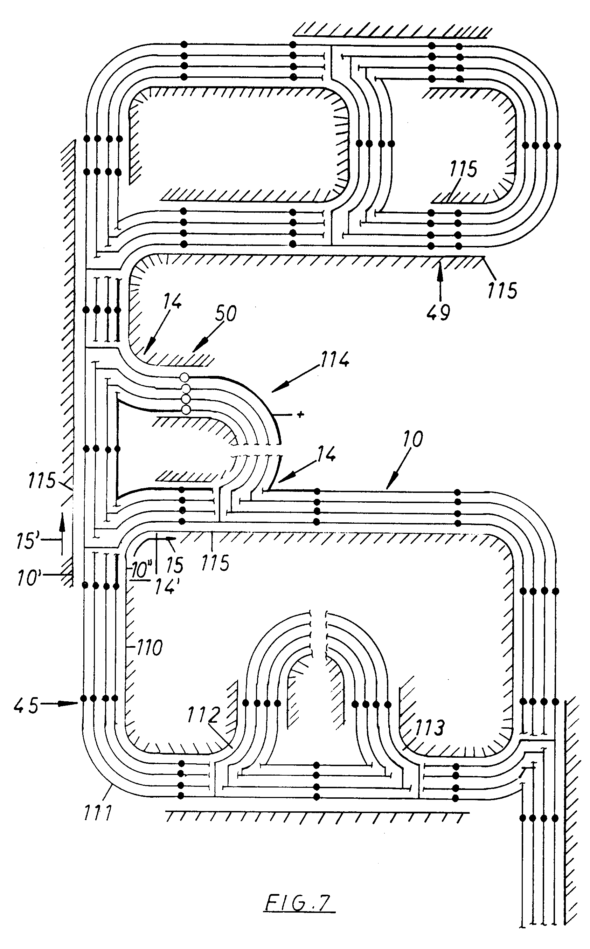

Für die Ausbildung eines passiven Systems von Schienen 10 einer Transportvorrichtung, etwa gemäß Fig.7, also für ein Schienensystem ohne durch Steuerung bewegliche Teile, ist es von Bedeutung, daß der Wagen 11, der auch eine Lokomotive sein kann, also andere nicht steuerbare Wagen zieht oder schiebt, an Verzweigungsbereichen von Schienenweichen in die jeweils gewünschte Richtung gesteuert werden kann. Hierzu ist außer dem geeigneten Steuersystem eine geeignete Ausbildung der Schiene 10 bzw. ihrer Weichen 14 und der Wagen 11 erforderlich. Die Ausbildung der Schienen 10 bzw. Weichen 14 und des Wagens 11 muß dabei dem Grundgedanken gerecht werden, daß zumindest im Verzweigungsbereich 14' von Schienenweichen 14, vgl. Fig.4b, jeweils ein in eine der Weichenrichtungen 15, 15' längsführender starrer Schienenabschnitt 10', 10'' vorhanden ist, und daß der Wagen 11 mindestens ein wahlweise in einen der längsführenden Schienenabschnitte 10', 10'' eingreifendes Führungselement 16', 16'' aufweist. Je nach Eingriffssteuerung des Führungselements 16' oder 16'' wird der Wagen 11 dann in die Laufrichtung 15 oder in die Laufrichtung 15' gezogen, vgl. Fig.4b.

Obwohl es grundsätzlich auch denkbar ist, daß ein Führungselement zugleich auch den Antrieb des Wagens 11 übernimmt, erscheint es jedoch vorteilhafter, Führungselemente 16', 16'' und die zum Antrieb erforderlichen Antriebsräder 13 jeweils separat auszubilden. Das ergibt sich im wesentlichen mit Hinblick auf die Exaktheit der Führung in Kurvenbereichen bzw. im Verzweigungsbereich 14, und unter Berücksichtigung der von dem Wagen 11 zu transportierenden Lasten. Durch eine genaue Kurvenführung kann auch dafür gesorgt werden, daß die erforderliche Strom- und Datenabnahme mit den Stromabnehmern 40 von den Stromschienen 39 zuverlässiger erfolgen kann.

Damit der Wagen 11 bei Kurvenfahrt genau die ihm vorgeschriebene Bahn verfolgen kann, sind die Führungselemente 16', 16'' in unmittelbarer Nähe von abstützenden Rollen 17 angeordnet, und zwar in etwa vertikal übereinander, wie Fig.1 rechts zeigt. Die Führungselemente 16', 16'' sind z. B. gemäß Fig.4 mit Tragarmen 61 durch eine Gehäuseöffnung 62 hindurch im Inneren des Gehäuses 26 am Antriebsmotor 12 bzw. dessen Getriebe 51 festgeflanscht. Die Befestigung erfolgt z. B. gemäß Fig.4 an Verschraubungsstellen 63. Der den Antriebsmotor 12 und den Stellmotor 23 aufnehmende Gehäuseinnenraum 26''' ist nach außen hermetisch abgeschlossen, wobei zum Abschluß im Bereich der Antriebswelle 21 und der Anflanschungen der Tragarme 61 jeweils elastische Balgabdichtungen 26^{IV} vorhanden sind.

Gemäß Fig.4b ist etwa mit gleichem Abstand zwischen den Rollen 17 bzw. den Führungselementen 16', 16'' je ein Antriebsrad 13 angeordnet, das verzahnt ist. Mit dieser Verzahnung greifen die Antriebsräder 13 in die Antriebsformschlußelemente 20, welche vertikal nach unten offene entsprechend gezahnte Formschlußriemen an den Unterseiten der oberen Querschenkel 35'' sind und entsprechend geschützt liegen.

Es ist in dem Verzweigungsbereich 14' einer Weiche 14 erforderlich, daß nur eines der beiden Antriebsräder 13 in das zugehörige Antriebsformschlußelement 20 der Schiene 10 steuerbar ist. Andererseits ist es auch erforderlich, daß bei einer Antriebsradumschaltung beide Antriebsräder 13 zur Vermeidung von nichterfaßten Positionsänderungen des Wagens 11 auf der Schiene 10 in die Elemente 20 eingreifen, was unten weiter ausgeführt wird. Letztlich müssen auch beide Antriebsräder 13 gemeinsam ausgerückt werden können, um den Wagen 11 von der Schiene 10 abnehmen zu können. Die Führungselemente 16', 16'' müssen entsprechend bewegt werden können. Hierzu zeigt das vorliegende Ausführungsbeispiel eine beweglich gelagerte Baugruppe aus Antriebsmotor 12 und Getriebe 51, die von einer Lagerwelle 22 relativbeweglich zum Wagengehäuse 26 gehalten ist. Die Lagerwelle 22 erlaubt gemäß Fig.1 sowohl Verdrehungen, als auch Vertikalbewegungen, so daß dadurch und durch die Kombination dieser Bewegungen die erforderlichen Bewegungen der Antriebsräder 13 und der Führungselemente 16', 16'' erreicht werden können.

Fig.4b läßt in Vergleich zu Fig.4a erkennen, daß das Antriebsrad 13 durch die Kurvenfahrt des Wagens 11 nicht mehr auf der Verbindungslinie der beiden Führungselemente 16' liegt, also nach innen gerückt wurde. Dies wird durch die aus Fig.4 ersichtliche Verschieblichkeit des Antriebsrads 13 quer zur Wagenlaufrichtung 18 erreicht. Hierzu besitzt das Rad 13 eine antriebsmotorseitige Kupplungshülse 64, die innenverzahnt ist und längsverschieblich auf einer axial unverschieblichen, außen vielkeilverzahnten Mitnehmerhülse 65 sitzt, die mit der Antriebswelle 21 durch Verschraubung fest verbunden ist. Das Antriebsrad 13 ist mit einer Feder 66 an einem getriebenahen Flansch 67 der Mitnehmerhülse 65 abgestützt, so daß es nach der in Fig.4b dargestellten Kurvenfahrt wieder in seine in Fig.4 dargestellte Stellung zurückgedrückt wird.

Fig.1 zeigt mit ausgezogenen Strichen eine horizontale Stellung der Antriebswelle 21, was der höchstmöglichen Stellung des Antriebsmotors 12 entspricht, bei der die beiden Antriebsräder 13 in die Antriebsformschlußelemente 20 beider oberen Querschenkel 35'' eingreifen, wie auch die Führungselemente 16', 16'' hinter die als längsdurchlaufende Führungsrippen ausgebildeten Führungsteile 19 greifen. Die Führungselemente 16', 16'' sind beispielsweise kugelgelagerte Führungsrollen.

In strichpunktierter Darstellung der Fig.1 wird die Lagerwelle 22 verdreht und abgesenkt dargestellt, so daß das linke Antriebsrad 13 in Eingriff mit dem benachbarten Antriebsformschlußelement 20 ist. Auf der anderen Seite ist das Führungselement 16'' abgesenkt dargestellt, so daß bei einer derartigen Anordnung des Antriebsmotors 12 beim Einfahren des Wagens 11 in eine Rechtsweiche ein Geradeauslauf bzw. eine Weiterfahrt des Wagens 11 erfolgt, bei der die in Fig.1 nicht dargestellten Führungselemente 16'' die Weichenrichtung 15' bestimmen würden.

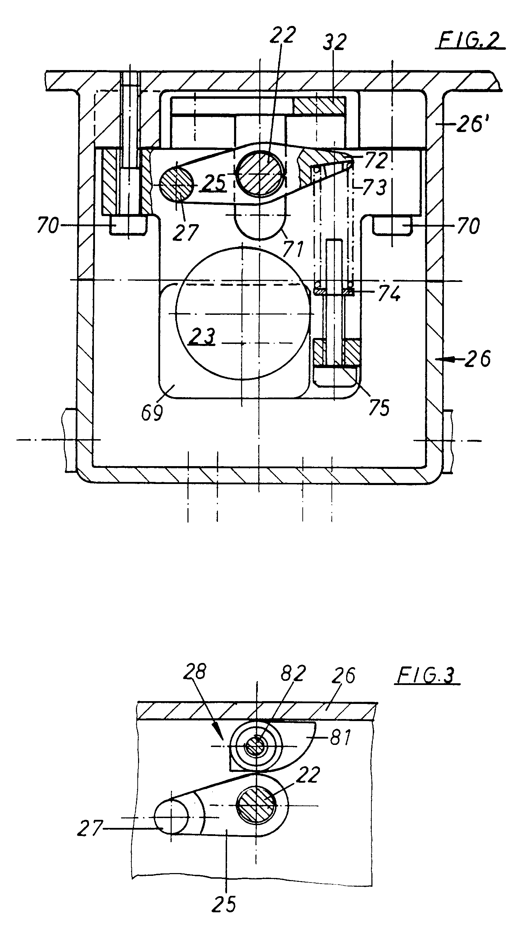

Der Zusammenbau der Lagerwelle 22 mit dem Antriebsmotor 12 erfolgt über die insbesondere aus den Fig.4, 6 ersichtliche Kopfplatte 68, die an dem Untersetzungsgetriebe 51 befestigt ist und in die die Lagerwelle 22 eingeschraubt ist. Die Lagerwelle 22 ist ihrerseits mit den Schwingen 25 einer Schwingenwelle 27 gehalten, welche mit einem Ende in eine Stirnwand 26'' des Gehäuses 26 eingreift und andererseits in einem Lagerbock 69 drehbar gelagert ist, der seinerseits mit Befestigungsbolzen 70 am Oberteil 26' des gemäß Fig.2 zweiteiligen Gehäuses 26 festgelegt ist. Der Lagerbock 69 hat eine dem Vertikalbewegungsbedarf der Lagerwelle 22 entsprechend tiefe Ausnehmung 71. Die motorseitige Schwinge 25 ist mit ihrem der Schwingenwelle 27 gegenüberliegenden Ende 72 auf einer Feder 73 abgestützt, deren anderes Ende auf dem Spannring 74 einer Spannschraube 75 abgestützt ist, welche die Einstellung der auf die Schwinge 25 wirkenden Federkraft erlaubt. Diese Federkraft muß überwunden werden, wenn die Lagerwelle 22 bewegt werden soll. Die maximal mögliche Auslenkung der Schwinge 25 wird durch die auf dem Boden der Lagerbockausnehmung 71 zur Auflage kommende Lagerwelle 22 bestimmt.

Um den Antriebsmotor 12 zu bewegen, besitzt die mit diesem starr verbundene Kopfplatte 68 eine Kulisse 24, deren genaue Form beispielsweise aus Fig.1 ersichtlich ist. In diese Kulisse 24 greift ein Stellmotor 23 mit einem Kulissenbolzen 33 ein, der starr mit einem Exzenter 76 für eine Steuerplatte 31 verbunden ist. Stellmotorseitig hat der Exzenter 76 eine Scheibe 77, die mit einem Stellungsmelder 78 für die Position des Exzenters 76 bzw. des Bolzens 33 zusammenwirkt. Über die aus Fig.6 ersichtliche Schraubverbindung 79 ist der Exzenter 76 mit einer gestrichelt dargestellten Abtriebswelle 80 des Untersetzungsgetriebes 23' bzw. des Stellmotors 23 verbunden.

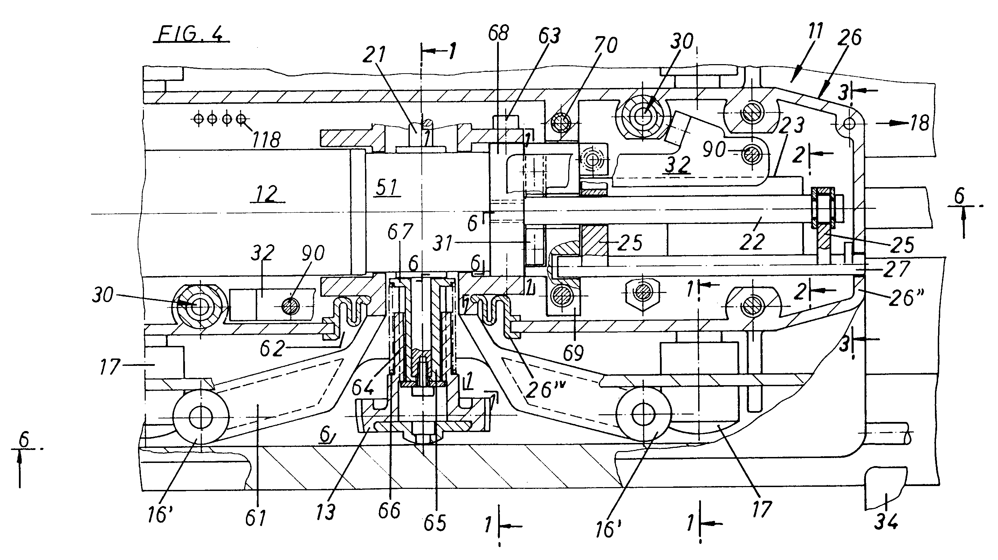

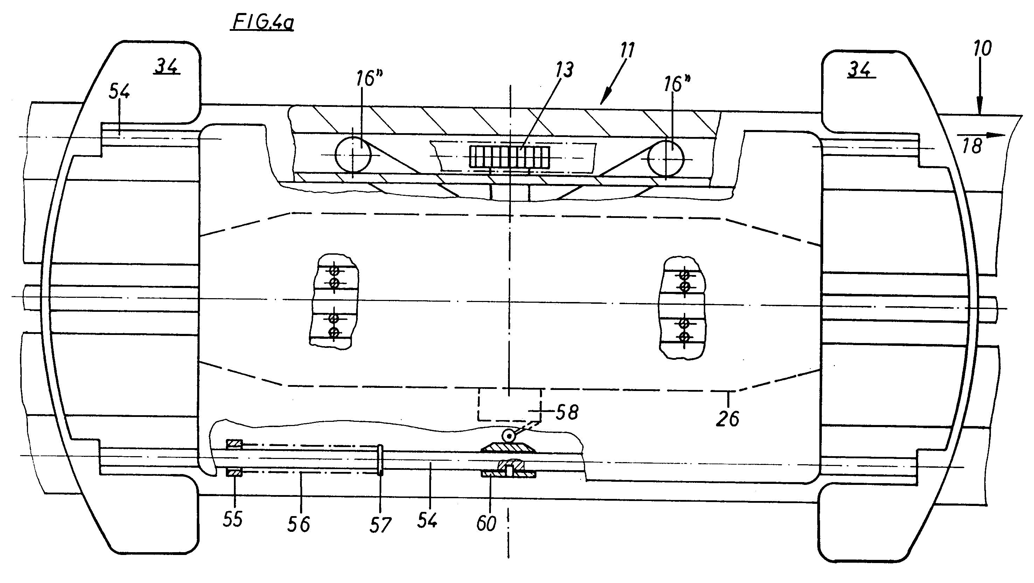

Die gehäusestirnseitige Schwinge 25 wirkt gemäß Fig.3, 6 mit einer Handverstelleinrichtung 28 zusammen, die die Stellung der Lagerwelle 22 zu beeinflussen erlaubt. Die Fig.3 zeigt die Horizontalstellung eines Exzenternockens 81 der Handeinstelleinrichtung 28. Wird die Verstellschraube 82 der Einrichtung 28 im Uhrzeigersinn gedreht, so wird die Lagerwelle 22 nach unten verlagert. Durch Verdrehung des Kulissenbolzens 33 im Uhrzeigersinn der Fig.1 erreicht die Kopfplatte 68 mit ihrer Kulisse 24 die in Fig.1 strichpunktiert dargestellte Stellung 68'. Das ergibt sich daraus, daß die Lagerwelle 22 gemäß Fig.2 nur entsprechend dem Zusammendrücken der Feder 73 und der gemäß Fig.1 erfolgten Linksverstellung abgesenkt werden kann, so daß das Führungselement 16' außer Eingriff kommt. Bei einer Verstellung des Bolzens 33 im Gegenuhrzeigersinn würde die Kopfplatte 68 zu einer nicht dargestellten Absenkung mit Verschwenkung im Gegenuhrzeigersinn gezwungen, so daß dementsprechend das Führungselement 16' und damit das zugehörige Antriebsrad in Eingriff bliebe, während das in Fig.1 linke Eingriffsrad 13 abgesenkt würde.

Die dargestellte Mittelstellung des Bolzens 33 erlaubt ersichtlich den Eingriff beider Antriebsräder 13 und Führungselemente 16', 16''. Es ist also möglich, beim Umschalten der Antriebsräder 13 vom Eingriff auf einer Seite in den Eingriff auf der anderen Seite über den beidseitigen Eingriff der Antriebsräder 13 zu schalten, so daß eine einmal eingenommene Position des Wagens 11 beim Umschalten gewahrt bzw. eine Änderung meßtechnisch erfaßt werden kann.

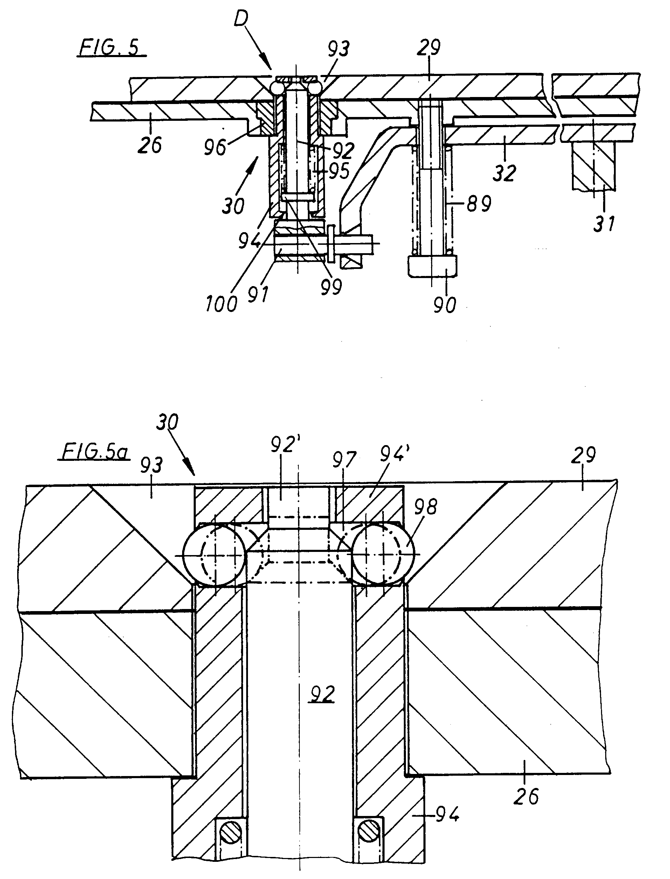

Die Beaufschlagung der Steuerplatte 31 mit dem Exzenter 76 dient der Steuerung von Verriegelungseinrichtungen 30 für einen Werkstückträger 29. Die Steuerplatte 31 ist mit einer Befestigungsschraube 83 an einem Steuerhebel 32 für in Fig.5 näher dargestellte Verriegelungseinrichtungen 30 befestigt. Die Steuerplatte 31 hat eine Ausnehmung 84 für den Exzenter 76 und einen Längsschlitz 85, in dem sich die Lagerwelle 22 vertikal bewegen kann. Die Steuerplatte 31 ist zwischen dem Lagerbock 69 und einer Abdeckplatte 86 befestigt, der seinerseits eine Lagerbuchse 87 zur Drehlagerung des Exzenters 76 mit Scheibe 77 und Bolzen 33 aufweist. Außerdem hat der Lagerbock 68 im Bewegungsbereich des Steuerhebels 32 eine Vertikalausnehmung 88, um eine durch den Lagerbock 69 unbehinderte Vertikalbewegung des Steuerhebels 32 zu ermöglichen.

Eine vertikale Abstützung des Steuerhebels 32, der sich aus der Nähe des Gehäuseendes 26 auf der einen Wagenseite bis in die Nähe der dieser Stirnseite 26'' abgewendeten hinteren Stirnseite auf der anderen Wagenseite erstreckt, erfolgt mit Federn 89 auf im Gehäuse 26 vertikalen Schraubenbolzen 90. Die Federn 89 drücken den Steuerhebel 32 nach oben gegen die obere Hälfte 26' des Gehäuses 26, so daß mit ihnen über Querstifte 91 gekuppelte Verriegelungsstifte 92 in Ausnehmungen 93 des Werkstückträgers 29 hineinragen und in der dargestellten Position der Fig. 5 Sperrkugeln 98 in den Ausnehmungen 93 halten, so daß der Werkstückträger 29 durch eine Hülse 94 verriegelt wird. Gemäß Fig.5 ist der Verriegelungsstift 92 der Verriegelungseinrichtung 30 vertikal verschieblich in der Hülse 94 geführt und gegen diese mit einer Feder 95 abgestützt, die jedoch durch die Kraft der Feder 89 überwunden wird, so daß der Stift 92 in seiner dargestellten oberen Lage gehalten ist, wie auch die durch die Feder 95 nach oben gedrückte längsverschiebliche Hülse 94, die in einer Buchse 96 des Gehäuses 26 gleitet. In Fig.5a ist eine entsprechende Buchse 96 entfallen und die Hülse 94 gleitet direkt in eine Ausnehmung des Gehäuses 96. Das obere in die Ausnehmung 93 eingreifende Ende 94' der Hülse 94 ist durchbrochen und lagert in seinen Öffnungen 97 Kugeln 98. Außerdem ist das Ende 92' des Stifts 92 so abgesetzt, daß letzterer die Kugeln 98 in die mit ausgezogenem Strich dargestellte Stellung vorschiebt, wenn er seine in Fig.5a mit ausgezogenen Strichen dargestellten oberste Lage einnimmt, und ein Zurückweichen der Kugeln 98 in die strichpunktiert dargestellte Lage gestattet, wenn er selbst in die strichpunktiert dargestellte Lage zurückgezogen wurde. Im ersten Fall sperren die Kugeln 98 ein Abheben des Werkstückträgers 29 vom Gehäuse 26 und damit vom Wagen 11 und im zweiten Falle gestatten die zurückweichenden Kugeln 98 ein Abheben des Werkstückträgers 29, wenn nämlich ein Störfall vorliegt, der ein Abheben des Werkstückträgers 29 nach oben erforderlich macht. Die strichpunktiert dargestellte Störfallstellung des Stifts 92 wird dadurch erreicht, daß der Steuerhebel 32 entsprechend nach unten gezogen wird. Dies Nachuntenziehen wird durch eine entsprechende Beaufschlagung der Steuerplatte 31 durch die Lagerwelle 22 erreicht, in dem die Lagerwelle 22 durch eine Betätigung der Handverstelleinrichtung 28 in dem Schlitz 85 nach unten bewegt wird und die Steuerplatte 31 um einige Millimeter nach unten bewegt. Dabei sitzt der Ringbund 99 des Stifts 92 noch nicht auf dem Ringkragen 100 der Hülse 94 auf, so daß diese nach wie vor in die Ausnehmung 93 des Werkstückträgers 29 eingreift. Die Sperrteile 92,98 haben die strichpunktierte Stellung, bei der die Handverstelleinrichtung so betätigt ist und beide Räder 13 und Führungselemente 16', 16''in Eingriff sind. Eine weitergehende Verschiebung des Stifts 92 nach unten und damit ein Ausrücken der Hülse 94 aus der Ausnehmung 93 ist nur dann möglich, wenn der Steuerhebel 32 durch die Steuerplatte 31 entsprechend beaufschlagt wird. Das ist nur durch den Exzenter 76 möglich, sofern dieser vom Stellmotor 23 entsprechend bewegt wird. In diesem Fall gelangt die Steuerplatte 31 in ihre tiefsten Stellung und rückt damit den Stift 92 zbd Hülse 94 über den Steuerhebel 32 vollends aus der Ausnehmung 93 des Werkstuckträgers 29 aus.

Zur Erläuterung der Steuerung für die Antriebsräder 13 und die Führungselemente 16', 16'' sowie zur weiteren Erläuterung der Trägerverriegelungseinrichtung 30 wird auf Fig.1a Bezug genommen, die im wesentlichen eine Ansicht A der Fig.6 der Steuerplatte 31 zeigt, und zwar im wesentlichen für die Exzenterausnehmung 84 und den Lagerwellenschlitz 85. In letzterem sind die unterschiedlichen Positionen der Lagerwelle 22 eingezeichnet, während die Ausnehmung 84 in Bezug auf Stellungen des Exzenters 76 und der Steuerkulisse 24 eingezeichnet ist.

In ihrer Normalstellung, also unbeeinflußt durch Exzenter 76 und Lagerwelle 22 sind die Ausnehmungen 84 und der Schlitz 85 sowie der Exzenter 76, der Bolzen 33 und die Lagerwelle 22 in einer mit ausgezogenem Strich dargestellten Stellung. Dementsprechend befinden sich die Antriebsräder 13 und die Führungselemente 16', 16'' beidseitig im Eingriff und die Verriegelungseinrichtungen 30 sind ebenfalls im Eingriff mit dem Werkstückträger 29.

Wird der Bolzen 33 durch den Stellmotor 23 in Blickrichtung der Fig. 1a im Uhrzeigersinn gedreht, so nimmt er die strichpunktierte Stellung ein. Infolgedessen verschiebt sich die Kopfplatte 68, wie bereits oben erläutert, in die in Fig. 1 strichpunktiert dargestellte Stellung 68'. Die Steuerkulisse 24 hat die in Fig.1a strichpunktierte Stellung. Eine derartige Verstellung des mit dem Exzenter 76 starr verbundenen Bolzens 33 hat eine entsprechende Bewegung des Exzenters 76 in die strichpunktierte Stellung der Fig. 1a, unten, zur Folge, was jedoch die Stellung der Steuerplatte 31 nicht beeinflußt, da die Ausnehmung 84 entsprechend groß ist. Dementsprechend bleibt die Stellung der Steuerplatte 31 ungeändert, wie strichpunktiert dargestellt wurde, zumal die Absenkung der Lagerwelle 22 in die strichpunktierte Stellung der Fig. 1, 1a nicht zu einer Beaufschlagung der Steuerplatte 31 führt. Infolgedessen bleibt die Verriegelungseinrichtung 30 unbetätigt, lediglich die in Laufrichtung 18 linken Führungselemente 16'' und das zugehörige Antriebsrad 13 werden ausgerückt, so daß eine Steuerung des Wagens 11 z. B. für Kurvenfahrt nach rechts erfolgt ist, d.h. im Uhrzeigersinn.

Eine entsprechende Steuerung für Kurvenfahrt nach links, d.h. im Gegenuhrzeigersinn, ist ebenfalls möglich und hat zur Voraussetzung, daß der Bolzen 33 in eine in Fig. 1a nicht dargestellte, zur vertikalen Symmetrieachse spiegelbildlich angeordnete Stellung bewegt wird, so daß dementsprechend die in Wagenlaufrichtung 18 rechten Führungselemente 16' und das zugehörige Antriebsrad 13 ausgerücktwerden und damit der Wagen 11 für Kurvenfahrt nach links bzw. im Gegenuhrzeigersinn oder durch nur linksseitigen Antrieb z. B. für das Durchfahren einer Rechtsweiche gesteuert ist.

Eine weitere für den Betrieb der Transportvorrichtung erforderliche Stellung ist die Entladestellung, in der ein Abladen der Last des Wagens 11 durch eine horizontale Relativverstellung zum Werkzeugträger 29 erfolgt. Dazu müssen die Stifte 92 und die Hülse 94 vollständig nach unten gezogen werden, was durch Verdrehung des Exzenters 76 mit dem Stellmotor 23 erfolgt, demzufolge die Steuerplatte 31' gemäß Fig. 1a ihre tiefste gestrichelt dargestellte Stellung einnimmt, die durch die Stellung der Lagerwelle 22 nicht behindert wird, wie auch nicht durch die Stellung des Bolzens 33, der bei unbeeinflußter Stellung der Steuerkulisse 24 seine höchstmögliche, auf die Kopfplatte 68 jedoch einflußlose Lage einnimmt. Die Steuerkulisse hat die gestrichelt eingezeichnete Stellung. Infolgedessen sind die Antriebsräder 13 und Führungselemente 16', 16'' jeweils im Eingriff.

Für den Störfall muß dafür gesorgt werden, daß der Wagen 11 von der Schiene 10 genommen werden kann. Infolgedessen ist dafür zu sorgen, daß die Antriebsräder 13 und Führungselemente 16', 16'' beidseitig ausgerückt werden, was durch die auf die Lagerwelle 22 einwirkende Handverstelleinrichtung 28 erreicht wird, so daß diese die punktiert dargestellte Stellung einnimmt. Dabei drückt die Lagerwelle 22 die Steuerplatte 31 einige Millimeter nach unten, nämlich zur Freigabe der Kugeln 98, so daß die Last nach oben abgehoben werden kann. Dabei kommt die Lagerwelle 22 in die punktierte Stellung der Fig. 1a und bewirkt die punktierte Stellung der Steuerplatte 31 samt Steuerkulisse 24, für den Fall beidseitigen Eingriffs der Antriebsräder 13 und Führungselemente 16', 16''. Wenn der Störfall z. B. bei Eingriff der Führungselemente 16' erfolgt, bewirkt eine Betätigung der Handverstelleinrichtung 28 ein Absenken der Kopfplatte 68 und damit der Steuerkulisse 24 in die in Fig.1a untere gepunktete Stellung, wobei das Antriebsrad 13 und die Führungselemente 16' ausrasten.

Für die vorbeschriebene Steuerung des Wagens 11 müssen dessen Antriebsmotor 12 und dessen Stellmotor 23 mit der erforderlichen Energie und den erforderlichen Steuerbefehlen versorgt werden. Hierzu besitzt der Wagen Stromabnehmer 40, die jeweils an gemäß Fig. 4b horizontal schwenkbeweglichen Hebeln 101 angebracht sind. Die Stromabnehmer 40 liegen in Abstimmung auf die Anordnung der Stromschienen 39 gemäß Fig. 1 paarweise nebeneinander, so daß die Schwenkhebel 101 entsprechend paarweise parallel angeordnet und von einer zwischen ihnen wirkenden Feder 102 zur Kontaktgabe der Stromabnehmer 40 mit den Stromschienen 39 auseinandergedrückt werden. Dabei bewirkt die federnde Anordnung der Stromabnehmer 40 zugleich einen Ausgleich der Toleranzen durch Anordnung und Gestaltung der an der Stromabnahme beteiligten Bauteile des Wagens 11 und der Schiene 10.

Gemäß Fig. 1 sind die Stromschienen 39 in zwischen den unteren Querschenkeln 35' angeordneten Isolationsprofilen 38 untergebracht, die längs durchlaufen und die Stromschienen 40 oben abdecken. Es sind drei solcher Profile 38 vorhanden, die von Verbindungsplatten 46 getragen sind und von denen die beiden äußeren mit den Querschenkeln 35' in mechanischer Verbindung stehen. Die Anordnung der Isolationsprofile 38 ist so getroffen, daß sich Stromabneh mereingriffsschlitze 41 ergeben, in die die Stromabnehmer 40 und Räumstifte 119 eingreifen, die in Wagenlaufrichtung vor den Stromabnehmern 40 angeordnet sind, um die Eingriffsschlitze 41 evtl. von dort unzulässigerweise befindlichen Bauteilen oder Verschmutzungen zu reinigen, beispielsweise im Bereich der Verbindungsplatten 46 oder sofern die Bauteile und Verunreinigungen nicht durch die sonst nach unten offenen Schlitze 41 hindurchgefallen sind.

Außer den Stromschienen 39, von denen diejenigen mit größerem Querschnitt der Energieversorgung und diejenigen mit geringerem Querschnitt der Datenversorgung dienen, sind als Flachbandleitungen ausgebildete Steuerleitungen 42 mit einer Vielzahl von Adern 104 vorhanden. Mit diesen Steuerleitungen können Verbindungen zwischen Arbeitsstationen geschaffen werden, die der Wagen 11 anläuft. Da der Wagen 11 beispielsweise zu bearbeitende Werkstücke transportiert, können mit den Steuerleitungen 42 Verbindungen zwischen diesen Arbeitsstationen oder zu einer Zentraleinheit geschaffen werden, die beispielsweise die zeitliche Abfolge des Einsatzes der Stationen steuert, oder es kann ein Notaus durchgeschleift werden.

Da die Transportvorrichtung Schienen hat, die den jeweils gegebenen örtlichen Anforderungen entsprechend verlegt werden müssen, bestehen die Schienen aus stumpf gestoßenen Stücken. Im Stoßbereich 45 müssen die Enden der Stromschienen 39 und der Steuerleitungen 42 miteinander verbunden werden. Infolgedessen sind Verbindungsplatten 48 vorhanden, die gemäß Fig. 1 Kontaktgeber 47, 48 aufweisen. Die Kontaktgeber 47 sind in die Oberplatte eingesetzte plattenparallele Stege, die an ihren Enden vertikal vorstehende und durch die Isolationen der Steuerleitungen 42 hindurch kontaktgebende Stifte haben, während die Kontaktgeber 48 zwischen den Verbindungsplatten 46 in deren Ausnehmungen vertikal bewegliche und federbelastete Kontaktleisten sind, deren Querschnitt auf die Querschnitte der Stromschienen 39 abgestimmt sind.

Die Verbindungsplatten 46 sind mit den Isolationsprofilen 38 durch Verbindungsschrauben 106 verbunden, so daß die Isolationsprofile 38, insbesondere deren mittleres, welches wegen der beiden Stromabnehmereingriffsschlitze 41 nur von den Verbindungsplatten 46 oder etwaigen Zwischenstützen getragen wird, in ausreichendem Maße festgelegt sind.

Die Verbindungsplatten 46 haben an Befestigungstellen 107 Befestigungsbohrungen 108 zum Durchgriff von nicht näher dargestelltem Befestigungselementen, die in hinterschnittene Befestigungsnuten 44 der Unterseite der unteren Querschenkel 35' der C-förmigen Profilstücke 35 eingreifen. Diese besitzen jeweils an ihren wagenabgewendeten Außenflächen 43 mehrere, einander parallel verlaufende Befestigungsnuten 44. An diesen Befestigungsnuten können die erforderlichen Befestigungen erfolgen, beispielsweise eine Befestigung zwischen Profilstücken und Abstützelementen, oder eine Befestigung zwischen Profilstücken und Anbauelementen. Bei geringeren Belastungen der Schienen 10 kann es ausreichen, wenn die Schienenstücke jeweils nur an ihren Stoßstellen durch eine Stütze 109 abgestützt sind.

Die Stücke der Schienen 10 müssen so ausgebildet sein, daß die Transportvorrichtung den jeweils gegebenen örtlichen Verhältnissen angepaßt werden kann. Einen beispielsweisen Schienenplan zeigt Fig. 7 mit geraden Schienenstücken 110, Bogenstücken 111, Linksweiche 112 und Rechtsweiche 113. Sofern das Schienensystem nicht in einer einzigen Ebene verlegt werden kann, sind Aufwärtsbogen und Abwärtsbogen erforderlich.

Die Verbindungsstellen der Schienenstücke bzw. ihr Stoßbereich 45 ist in Fig. 7 schwarz gepunktet dargestellt, wenn die Stromschienen- und Steuerleitungsenden kontaktgebend miteinander verbunden sind. Im Bereich von Stromschienenumschaltungen 50 erfolgt ein solches Durchschalten nicht, weil sonst in dem zwischen zwei Linksweichen 14 gebildeten Stromschienenabschnitt 114 unterschiedliches Potential führende Stromschienen zusammengeschaltet würden. Das ergibt sich insbesondere aus dem Verlauf der stärker eingezeichneten, z.B. den Pluspol + kennzeichnendenStromschiene.

Fig. 7 läßt durch schematische Darstellung von längs den Schienen 10 eingezeichneten Markierungen 115 erkennen, wo ein Antriebsradeingriff möglich bzw. notwendig ist. So ergibt, sich, daß beispielsweise auf Längs- oder Bogenstrecken großenteils nur auf einer Seite ein Antriebsradeingriff vorhanden sein muß. Dementsprechend braucht die Schiene auch nur dort Führungsteile 19 für Führungselemente 16', 16'' und Antriebsformschlußelemente 20 für Antriebsräder 13 aufweisen. Im Bereich von Weichen 14, also im Verzweigungsbereich 14' ist jedoch wegen der beliebig möglichen Richtungswahl und dem damit verbundenen Umschalten der Antriebsräder 13 und Führungselemente 16', 16'' auf beiden Schienenseiten je ein längsführender Stromschienenabschnitt 10', 10'' erforderlich, so daß zumindest hier ein höherer baulicher Aufwand getrieben werden muß. Außerdem ist lediglich in Bereichen einer Stromschienenumschaltung 50 oder im Bereich einer Antriebsradumschaltung 49 die Anordnung zweier längsführender Schienenabschnitte 10', 10'' erforderlich.

Wegen der Stromschienenumschaltung 50, aber vor allem wegen der Unterbrechung der Stromschienen im Bereich der Weichen 14, was sich aus der in Fig. 4b dargestellten Unterbrechung des mittleren Isolationsprofils 38 ergibt, sind in einem die Unterbrechungslänge überbrückenden Abstand hintereinander angeordnete Stromabnehmerpaare 40', 40'' angeordnet, die mit den Motoren 12, 23 des Wagens 11 bzw. deren Klemmen so geschaltet werden müssen, daß von ihnen Strom zu einer Klemme immer nur in derselben Richtung fließen kann. Das läßt sich dadurch erreichen, daß ein Stromabnehmer mit den beiden Klemmen eines Motors jeweils über einen Gleichrichter verbunden ist, und daß die Gleichrichter eines Stromabnehmers einander entgegengesetzt angeschlossen sind, wobei der Anschluß aller Stromabnehmer an die Motorklemmen gleichsinnig erfolgt.

Auf dem in Fig. 7 dargestellten Schienensystem der Transportvorrichtung werden die Wagen 11 zwischen nicht dargestellten Arbeitsstationen verfahren. Dies dient dem Lastentransport mit dem Werkstückträger 29. An einer Arbeitsstation wird der Werkstückträger entweder be- oder entladen, oder er wird abgenommen oder abgesetzt. Fig. 1 deutet ein Absetzen des Werkstückträgers 29 auf geringfügig anhebenden Kuven 116 an, von denen aus der Werkstückträger 29 mit dem Werkstück z.B. durch eine Handhabungsvorrichtung weiter transportiert wird. Diese Art des Abladens bzw. Übernehmen von Werkstücken hat den Vorteil, daß Positionierungen von Werkstücken auf Werkstückträgern 29 zur Positionierung auf Wagen 11 übernommen werden können. Solche Positionierungen von Werkstücken auf Werkstückträgern 29 werden durch Arbeitsmaschinen bzw. für die Bearbeitung der Werkstücke benötigt. Es ist dann lediglich erforderlich, den Werkstückträger 29 in eine bestimmte Position zum Wagen 11 zu bringen, die durch einen Sensor 120 für einen Näherungsschalter zur Steuerung der Verriegelungseinrichtung 30 festgestellt wird.

Die Beschaltung der Steuerungseinrichtung für Motoren 12, 23 ergibt sich weitgehend aus den oben beschriebenen Erfordernissen insbesondere zur Antriebsradumschaltung und zur Betätigung der Trägerverriegelungseinrichtung 30. Dabei kann auf bekannte Maßnahmen zurückgegriffen werden. In den Figuren sind lediglich schematisch die Anschlußleitungen 117 der Motoren 12, 23 dargestellt. Zusätzlich ist in Fig. 4 eine vertikale Durchschaltung von Stromleitungen 118 angedeutet, beispielsweise um elektrische Energie und elektrische Signale auf den Werkzeugträger 21 und auch in eine Arbeitsmaschine bringen zu können.

## Patentansprüche

1. Transportvorrichtung für Werkstücke, mit Schienen (10) für Wagen (11), die auf der Schiene (10) abstützende, quer zur Wagenlaufrichtung mit Abstand voneinander angeordnete Schienenlaufrollen (17) haben und die von ihrem fernsteuerbaren Antriebsmotor (12) bewegbar sind, der zwei an Antriebsformschlußelementen (20) der Schiene (10) in Bewegungsrichtung formschlüssig angreifende Antriebsräder (13) beaufschlagt, wobei zumindest im Verzweigungsbereich (14') von Schienenweichen (14) jeweils ein den Wagen (11) allein in eine der Weichenrichtungen (15,15') längsführender starrer Schienenabschnitt (10,',10'') vorhanden ist, wobei der Wagen (11) zwei einander an unterschiedlichen Wagenseiten gegenüberliegende Führungselemente (16',16'') hat, die wechselweise vertikal in Eingriff mit Führungsteilen (19) einander entsprechend gegenüberliegender Schienenabschnitte (10,',10'') zu bringen sind, wobei die beiden Antriebsräder (13) des Wagens (11) im Verzweigungsbereich (14') von Schienenweichen (14) entsprechend den Führungselementen (16',16'') mit der Schiene (10) in Antriebseingriff gelangen, **dadurch gekennzeichnet**, daß die Führungselemente (16',16'') und die Antriebsräder (13) mit etwa gleichen Abstand voneinander angeordnet und beide in vertikal über ihnen angeordnete Führungsteile (19) und Antriebsformschlußelemente (20) steuerbar sind.

2. Vorrichtung nach Anspruch 1, **dadurch gekennzeichnet,** daß der Wagen (11) vier Rollen (17) und vier in deren Nähe angeordnete Führungselemente (16',16'') aufweist, und daß zwischen zwei Rollen (17) oder Führungselementen (16'oder 16'') je ein Antriebsrad (13) quer zur Wagenlaufrichtung (18) verschieblich angeordnet ist.

3. Vorrichtung nach Anspruch 1 oder 2, **dadurch gekennzeichnet**, daß die Antriebsräder (13) eine gemeinsame Antriebswelle (21) haben, die von dem Antriebsmotor (12) drehantreibbar und damit schwenkfest verbunden ist, daß der Antriebsmotor (12) von einer in Wagenlaufrichtung (18) angeordneten verschwenkbaren und/oder vertikal beweglichen Lagerwelle (22) gehalten ist, und daß der Antriebsmotor (12) von einem wagengehäusefesten Stellmotor (23) verlagerbar ist.

4. Vorrichtung nach einem oder mehreren der Ansprüche 1 bis 3, **dadurch gekennzeichnet**, daß die Führungselemente (16',16'') mit Tragarmen (61) durch eine Gehäuseöffnung (62) hindurch am Antriebsmotor (12) oder an dessen Getriebe (51) festgeflanscht sind.

5. Vorrichtung nach einem oder mehreren der Ansprüche 1 bis 4, **dadurch gekennzeichnet**, daß der den Antriebsmotor (12) aufnehmende Gehäuseinnenraum (26''') nach außen mit elastischen Balgabdichtungen (26^{IV}) abgedichtet ist.

6. Vorrichtung nach Anspruch 3, **dadurch gekennzeichnet**, daß zur Verlagerung des Antriebsmotors (12) eine dem Eingriff des Stellmotors (23) dienende Steuerkulisse (24) vorhanden ist, deren Form die Steuerung des Eingriffs der Antriebsräder (13) und Führungselemente (16', 16'') in die Schiene (10) auf beiden Seiten oder wechselweise auf nur einer Seite oder das Ausrücken aller Antriebsräder (13) und Führungselemente (16',16'') erlaubt.

7. Vorrichtung nach Anspruch 3, **dadurch gekennzeichnet**, daß die den Antriebsmotor (12) haltende Lagerwelle (22) an zwei federnd abgestützten Schwingen (25) befestigt ist, die an einer im Wagengehäuse (26) verdrehbaren, parallel zur Lagerwelle (22) angeordneten Schwingenwelle (27) angebracht sind.

8. Vorrichtung nach Anspruch 7, **dadurch gekennzeichnet**, daß eine die Stellung der Lagerwelle (22) zu beeinflussen erlaubende Handverstelleinrichtung (28) vorhanden ist, die das Ausrücken aller Antriebsräder (13) und Führungselemente (16',16'') gestattet

9. Vorrichtung nach einem oder mehreren der Ansprüche 1 bis 8, **dadurch gekennzeichnet**, daß der Wagen (11) einen auswechselbaren Werkstückträger (29) und eine damit zusammenwirkende Trägerverriegelungseinrichtung (30) hat, die von dem Stellmotor (23) betätigbar ist.

10. Vorrichtung nach Anspruch 9, **dadurch gekennzeichnet**, daß eine von dem Stellmotor (23) angetriebene Steuerplatte (31) vorhanden ist, die einen die Verriegelungseinrichtung (30) außer Eingriff mit dem Werkstückträger (29) bringenden Steuerhebel (32) entgegen einer Federkraft zu betätigen vermag.

11. Vorrichtung nach Anspruch 10**, dadurch gekennzeichnet**, daß der Exzenter (76) für die Steuerplatte (31) mit einem der Verlagerung des Antriebsmotors (12) mittels einer Steuerkulisse (24) dienenden Kulissenbolzen (33) starr verbunden ist.

12. Vorrichtung nach einem oder mehreren der Ansprüche 1 bis 11, **dadurch gekennzeichnet**, daß der Wagen (11) in seinen Laufrichtungen (18) beidendig mit am Wagengehäuse (26) relativverschieblichen Stoßstangenholmen (34) versehen ist, die bei ihrem Auflaufen auf ein Hindernis einen vorbestimmt langen abgefederten Wagenauslauf bei abgeschaltetem oder umgepolten Antriebsmotor (12) zulassen.

13. Vorrichtung nach einem oder mehreren der Ansprüche 1 bis 12, **dadurch gekennzeichnet,** daß die Schiene (10) als Antriebsformschlußelemente (20) vertikal nach unten offen gezahnte Formschlußriemen für den Eingriff entsprechend gezahnter Antriebsräder (13) aufweist.

14. Vorrichtung nach einem oder mehreren der Ansprüche 1 bis 13, **dadurch gekennzeichnet,** daß die Schiene (10) im Weichenbereich (14') im Querschnitt aus zwei vertikalen, im wesentlichen C-förmigen Profilstücken (35) besteht, zwischen denen das Wagengehäuse (26) angeordnet ist, dessen es abstützende Rollen (17) auf den unteren Querschenkeln (35') laufen, und daß die oberen Querschenkel (35'') als Führungsrippen ausgebildete Führungsteile (19) für als Führungsrollen ausgebildete Führungselemente (16', 16'') haben und an ihren Unterseiten die Antriebsformschlußelemente (20) für die Antriebsräder (13) aufweisen.

15. Vorrichtung nach Anspruch 14, **dadurch gekennzeichnet,** daß zwischen den unteren Querschenkeln (35') der Profilstücke (35) an diesen festgelegte Isolationsprofile (38) mit davon getragenen Stromschienen (39) angeordnet sind, an denen Stromabnehmer (40) des Wagens (11) schleifend angreifen.

16. Vorrichtung nach Anspruch 15, **dadurch gekennzeichnet,** daß die Isolationsprofile (38) wagengehäuseseitig durchgehend glatt und mit vertikal durchgehenden Stromabnehmereingriffsschlitzen (41) versehen sind, die einen seitlichen Zugang zu den Stromschienen (39) gestatten.

17. Vorrichtung nach einem der Ansprüche 15 oder 16, **dadurch gekennzeichnet**, daß die Isolationsprofile (38) parallel zu den Stromschienen (39) verlaufende Steuerleitungen (42) aufweisen.

18. Vorrichtung nach einem oder mehreren der Ansprüche 14 bis 17, **dadurch gekennzeichnet**, daß die C-förmigen Profilstücke (35) in ihren wagenabgewendeten Außenflächen (48) hinterschnittene, längs durchlaufende Befestigungsnuten (44) aufweisen.

19. Vorrichtung nach einem oder mehreren der Ansprüche 14 bis 19, **dadurch gekennzeichnet**, daß die Schienen (10) aus stumpf gestoßenen Stücken bestehen, und daß im Stoßbereich (45) an den Befestigungsnuten (44) festlegbare Verbindungsplatten (46) vorhanden sind, die die Stromschienen- und Steuerleitungsenden miteinander verbindende Kontaktgeber (47,48) haben.

20. Vorrichtung nach einem oder mehreren der Ansprüche 14 bis 19, **dadurch gekennzeichnet,** daß die beiden C-förmigen Profilstücke (35) der Schienenweichen (14) zur Längsführung der Wagen (11) jeweils in eine der beiden Weichenrichtungen (15,15') verlaufen, und/oder daß außerhalb der Weichenbereiche (14') nur in Bereichen einer Antriebsradumschaltung (49) und/oder einer Stromschienenumschaltung (50) auf beiden längsführenden Schienenabschnitten (10', 10'') Antriebsformschlußelemente (20) vorhanden sind.

21. Vorrichtung nach einem der Ansprüche 15 bis 20, **dadurch gekennzeichnet**, daß für jede Stromschiene (39) zwei Stromabnehmer (40) vorhanden sind, die einen den Unterbrechungsabstand der Stromschienen (39) im Verzweigungsbereich (14') einer Weiche (14) überbrückenden Abstand voneinander haben und einander parallel an die Klemmen der Motoren (12, 23) angeschlossen sind.

## Claims

1. Transport device for workpieces, with rails (10) for wagons (11) which have rail rollers (17) supported on the rail (10) and arranged spaced from one another at right angles to the direction of travel of the wagon and which can be moved by their remote-controllable drive motor (12) which acts on two drive wheels (13) which engage in a form-locking manner on form-locking drive elements (20) of the rail (10), wherein there is in each case a rigid portion of rail (10', 10'') which guides the wagon (11) along into one of the switch point directions (15, 15') at least in the branching zone (14') of rail switch points (14), the wagon (11) having two guide elements (16', 16'') which lie opposite one another on different sides of the wagon and can be brought alternately and vertically into engagement with guide parts (19) of rail portions (10', 10'') lying correspondingly opposite one another, and the two drive wheels (13) of the wagon (11) come into driving engagement with the rail (10) in the branching zone (14') of rail switch points (14) in accordance with the guide elements (16', 16''), characterised in that the guide elements (16', 16'') and the drive wheels (13) are arranged at approximately the same distance from one another and can both be controlled in guide parts (19) and form-locking drive elements (20) arranged vertically above them.

2. Device as claimed in claim 1, characterised in that the wagon (11) has four rollers (17) and four guide elements (16', 16'') arranged in the proximity thereof and a drive wheel (13) is arranged in each case between two rollers (17) or guide elements (16' or 16'') so as to be movable at right angles to the direction of travel (18) of the wagon.

3. Device as claimed in claim 1 or 2, characterised in that the drive wheels (13) have a common drive shaft (21) which can be driven in rotation by the drive motor (12) and is connected thereto so as to be fixed against swivelling, the drive motor (12) is held by a bearing shaft (22) which is arranged in the direction of travel (18) of the wagon and can be swivelled and/ or moved vertically, and the drive motor (12) can be displaced by a servomotor (23) fixed to the housing of the wagon.

4. Device as claimed in one or several of claims 1 to 3, characterised in that the guide elements (16', 16'') are fixed flanging on the drive motor (12) or the gear (51) thereof with supporting arms (61) through a housing opening (62).

5. Device as claimed in one or several of claims 1 to 4, characterised in that the interior of the housing (26''') which receives the drive motor (12) is sealed against the exterior with resilient bellows seals (26^{IV}).

6. Device as claimed in claim 3, characterised in that for displacement of the drive motor (12) a control link (24) which serves for engaging the servomotor (23) is provided, the form of which permits the control of the engagement of the drive wheels (13) and guide elements (16', 16'') in the rail (10) on both sides or alternately only on one side or permits the disengagement of all drive wheels (13) and guide elements (16', 16'').

7. Device as claimed in claim 3, characterised in that the bearing shaft (22) holding the drive motor (12) is fixed on two spring-mounted rockers (25) which are mounted on a rocker shaft (27) which is rotatable in the wagon housing (26) and arranged parallel to the bearing shaft (22).

8. Device as claimed in claim 7, characterised in that a manual adjustment device (28) is provided which permits the position of the bearing shaft (22) to be influenced and allows the disengagement of all drive wheels (13) and guide elements (16', 16'').

9. Device as claimed in one or several of claims 1 to 8, characterised in that the wagon (11) has a removable workpiece carrier (29) and a carrier locking arrangement (30) which co-operates therewith and can be actuated by the servomotor (23).

10. Device as claimed in claim 9, characterised in that a control plate (13) is provided which is driven by the servomotor (23) and is able to actuate a control lever (32), which disengages the locking arrangement (30) from the workpiece carrier (29), against a spring force.

11. Device as claimed in claim 10, characterised in that the eccentric (76) for the control plate (31) is rigidly connected to a link bolt (33) which serves for the displacement of the drive motor (12) by means of a control link (24).

12. Device as claimed in one or several of claims 1 to 11, characterised in that the wagon (11) is constructed at both ends in its directions of travel (18) with push rod shafts (34) which are relatively movable on the wagon housing (26) and which when they encounter an obstruction allow a cushioned rundown of the wagon over a predetermined length with the drive motor (12) switched off or with polarity reversed.

13. Device as claimed in one or several of claims 1 to 12, characterised in that as the form-locking drive elements (20) the rail (10) has toothed form-locking belts which are open vertically downwards for the engagement of correspondingly toothed drive wheels (13).

14. Device as claimed in one or several of claims 1 to 13, characterised in that in the region (14') of the switch point the rail (10) consists in cross-section of two vertical profiled pieces (35) which are substantially C-shaped and between which the wagon housing (26) is arranged with the rollers (17) which support it running on the lower transverse arms (35') , and in that the upper transverse arms (35'') have guide parts (19) constructed as guide ribs for guide elements (16', 16'') constructed as guide rollers and have the form-locking drive elements (20) for the drive wheels (13) on their undersides.

15. Device as claimed in claim 14, characterised in that between the lower transverse arms (35') of the profiled pieces (35) there are arranged insulating profiles (38) which are fixed on the latter and have live rails (39) supported on them on which current collectors (40) of the wagon (11) engage by abrasion.

16. Device as claimed in claim 15, characterised in that the insulating profiles (38) are advantageously completely smooth on the wagon housing side and provided with vertically continuous current collector engagement slots (41) which allow lateral access to the live rails (39).

17. Device as claimed in one of claims 15 or 16, characterised in that the insulating profiles (38) have control lines (42) running parallel to the live rails (39).

18. Device as claimed in one or several of claims 14 to 17, characterised in that the C-shaped profiled pieces (35) have in their external surfaces (43) facing away from the wagon undercut fixing grooves (44) which run lengthwise.

19. Device as claimed in one or several of claims 14 to 19, characterised in that the rails (10) consist of butt-jointed pieces, and connecting plates (46) are provided which can be fixed on the fixing grooves (44) in the butting zone (45) and which have contact makers (47, 48) which connect the ends of the live rails and the control lines to one another.

20. Device as claimed in one or several of claims 14 to 19, characterised in that the two C-shaped profiled pieces 35) of the rail switch points (14) for lengthwise guiding of the wagons (11) each run in one of the two switch point directions (15, 15'), and/or that form-locking drive elements (20) are provided outside the switch point zones (14') only in regions of a drive wheel switch-over (49) and/or of a live rail switch-over (50) on both portions of rail (10', 10'') for lengthwise guiding.

21. Device as claimed in one of claims 15 to 20, characterised in that for each live rail (39) there are two current collectors (40) which are a distance from one another which bridges the gap distance of the live rails (39) in the branching zone (14') of a switch point (14), the current collectors (40) being connected parallel to one another to the terminals of the motors (12, 23).

## Revendications

1. Dispositif de transport pour des pièces à usiner, comportant des voies (10) destinées à des véhicules (11) comportant des galets de roulement (17) prenant appui sur la voie (10) qui sont disposés transversalement au sens de la marche du véhicule à une certaine distance les uns des autres, et qui peuvent être déplacés par leur moteur d'entraînement (12) télécommandable, lequel actionne deux roues motrices (13) en prise dans le sens du déplacement avec la forme d'éléments d'entraînement crabotés (20) de la voie (10), étant à préciser qu'au moins dans la zone d'embranchement (14') d'aiguilles de voies (14), il existe un tronçon de voie rigide (10', 10'') assurant seul le guidage longitudinal du véhicule (11) dans une des directions respectives d'aiguillage (15, 15'), le véhicule (11) étant équipé à cet effet de deux éléments de guidage (16', 16'') situés l'un en face de l'autre sur les différents côtés du véhicule, lesquels peuvent être alternativement contactés verticalement par des moyens de guidage (19) de tronçons de voie (10', 10'') situés de façon correspondante l'un en face de l'autre, les deux roues motrices (13) du véhicule (11) étant mises en prise avec la voie (10) en correspondance avec les éléments de guidage (16', 16'') dans la zone d'embranchement (14') d'aiguilles de voies (14), caractérisé en ce que les éléments de guidage (16', 16'') et les roues motrices (13) sont disposés à distance à peu près égale les uns des autres, et en ce que les deux peuvent être commandés par des moyens de guidage (19) et par des éléments d'entraînement crabotés (20) placés verticalement au-dessus d'eux.

2. Dispositif selon la revendication 1, caractérisé en ce que le véhicule (11) comporte quatre galets (17) et quatre éléments de guidage (16', 16'') disposés à proximité de ceux-ci, et en ce qu'entre deux galets (17) ou éléments de guidage (16'ou 16'') une roue motrice (13) est respectivement disposée de manière à pouvoir se déplacer dans le sens transversal au sens de la marche (18) du véhicule.

3. Dispositif selon l'une des revendications 1 ou 2, caractérisé en ce que les roues motrices (13) ont un arbre de transmission (21) commun, lequel peut être entraîné en rotation par le moteur d'entraînement (12) auquel il est relié de manière à ne pas pouvoir pivoter, en ce que le moteur d'entraînement (12) est maintenu par un arbre à palier (22) pivotant et/ou verticalement mobile placé dans le sens de la marche (18) du véhicule, et en ce que le moteur d'entraînement (12) peut être déporté par un servomoteur (23) placé dans un carter intégré au véhicule.

4. Dispositif selon l'une quelconque ou plusieurs des revendications 1 à 3, caractérisé en ce que les éléments de guidage (16', 16'') sont bridés au moteur d'entraînement (12) ou à son réducteur (51) par des bras de support (61) passant par une ouverture (62) du carter.

5. Dispositif selon l'une quelconque ou plusieurs des revendications 1 à 4, caractérisé en ce que l'espace intérieur du carter (26''') recevant le moteur d'entraînement (12) et est hermétiquement fermé vis-à-vis de l'extérieur par des joints élastiques à soufflet (26^{IV}).

6. Dispositif selon la revendication 3, caractérisé en ce que, pour le déport du moteur d'entraînement (12), il est prévu une coulisse de commande (24) servant à l'intervention du servomoteur (23), dont la forme permet de commander la prise des roues motrices (13) et des éléments de guidage (16', 16'') sur les deux côtés de la voie (10) ou alternativement d'un seul côté seulement, ou le désaccouplement de toutes les roues motrices (13) et de tous les éléments de guidage (16', 16'').

7. Dispositif selon la revendication 3, caractérisé en ce que l'arbre à palier (22) maintenant le moteur d'entraînement (12) est fixé sur deux bielles oscillantes (25) supportées élastiquement, lesquelles sont montées sur un arbre oscillant (27) disposé en rotation parallèlement à l'arbre à palier (22) dans le carter (26) du véhicule.

8. Dispositif selon la revendication 7, caractérisé en ce qu'il est prévu un dispositif de réglage manuel (28) permettant d'agir sur le position de l'arbre à palier (22), avec lequel toutes les roues motrices (13) et tous les éléments de guidage (16', 16'') peuvent être désaccouplés.

9. Dispositif selon l'une quelconque ou plusieurs des revendications 1 à 8, caractérisé en ce que le véhicule (11) est équipé d'un support de pièces à usiner (29) interchangeable et d'un dispositif de verrouillage (30) pouvant être actionné par le servomoteur (23), et fonctionnant en association avec ce support.

10. Dispositif selon la revendication 9, caractérisé en ce qu'il est prévu une platine de commande (31), entraînée par le servomoteur (23), qui est en mesure de désengager le levier de commande (32) du dispositif de verrouillage (30) avec le support de pièces à usiner (29) en s'opposant à l'effet de tension d'un ressort.

11. Dispositif selon la revendication 10, caractérisé en ce que l'excentrique (76) de la platine de commande (31) est relié rigidement à un tourillon (33) par l'intermédiaire d'une coulisse de commande (24) servant au déport du moteur d'entraînement (12).

12. Dispositif selon l'une quelconque ou plusieurs des revendications 1 à 11, caractérisé en ce que le véhicule (11) est équipé sur les deux extrémités de ses sens de marche (18) de longerons pare-chocs (34) relativement mobiles fixés sur le carter (26) du véhicule, lesquels permettent un ralentissement prédéterminé, long et amorti du véhicule lorsqu'ils heurtent un obstacle et que le moteur d'entraînement (12) est arrêté, ou que sa polarité est inversée.

13. Dispositif selon l'une quelconque ou plusieurs des revendications 1 à 12, caractérisé en ce que la voie (10) comporte des éléments d'entraînement crabotés (20), conçus sous la forme de courroies crabotées à denture verticale ouverte vers le bas destinées à l'engrènement de roues motrices (13) dentées de façon correspondante.

14. Dispositif selon l'une quelconque ou plusieurs des revendications 1 à 13, caractérisé en ce que dans la zone d'aiguillage (14'), le profil de la voie (10) est réalisé par deux éléments profilés (35) verticaux qui ont pour l'essentiel la forme d'un C, entre lesquels est disposé le carter (26) du véhicule dont les galets (17) le soutenant se déplacent sur les traverses inférieures (35'), et en ce que les traverses supérieures (35'') sont équipées de moyens de guidage (19) conçus sous la forme de nervures de guidage destinées à des éléments de guidage (16', 16'') conçus sous la forme de galets de guidage, et comportent les éléments d'entraînement crabotés (20) pour les roues motrices (13) sur leurs parties inférieures.

15. Dispositif selon la revendication 14, caractérisé en ce que des profilés isolants (38) sont prévus entre les traverses inférieures (35') des éléments profilés (35) et fixés à celles-ci, lesquels supportent des rails conducteurs (39) auxquels des trolleys (40) du véhicule (11) s'appliquent par frottement.

16. Dispositif selon la revendication 15, caractérisé en ce que, du côté du carter du véhicule, les profilés isolants (38) ont une surface lisse continue et comportent des fentes de prélèvement de courant (41) verticales continues, qui permettent un accès aux rails conducteurs (39) par le côté.

17. Dispositif selon l'une des revendications 15 ou 16, caractérisé en ce que les profilés isolants (38) comportent des lignes pilotes (42) qui sont parallèles aux rails conducteurs (39).

18. Dispositif selon l'une quelconque ou plusieurs des revendications 14 à 17, caractérisé en ce que les éléments profilés (35) en forme de C comportent sur leurs surfaces extérieures (43) opposées au véhicule des rainures de fixation (44) contre-dépouillées s'étendant sur toute leur longueur.

19. Dispositif selon l'une quelconque ou plusieurs des revendications 14 à 18, caractérisé en ce que les voies (10) sont réalisées par des éléments aboutés, et en ce que des plaques de jonction (46), pouvant être fixées aux rainures de fixation (44), sont prévues dans la zone d'accostage (45), lesquelles comportent les éléments de contact (47, 48) reliant les extrémités des rails conducteurs et des lignes pilotes entre elles.

20. Dispositif selon l'une quelconque ou plusieurs des revendications 14 à 19, caractérisé en ce que les deux éléments profilés (35) en forme de C des aiguilles de voies (14), pour le guidage longitudinal du véhicule (11), s'étendent dans une des deux directions respectives d'aiguillage (15, 15'), et/ou qu'en dehors des zones d'aiguillage (14'), des éléments d'entraînement crabotés (20) sont prévus uniquement sur les deux tronçons de voies (10', 10'') de guidage longitudinal dans les zones d'une inversion des roues motrices (49) et/ou d'une inversion de commutation (50) des rails conducteurs.

21. Dispositif selon l'une quelconque des revendications 15 à 20, caractérisé en ce que, pour chaque rail conducteur (39), il est prévu deux trolleys (40), lesquels sont placés l'un par rapport à l'autre à une distance qui franchit la distance d'interruption des rails conducteurs (39) dans la zone d'embranchement (14') d'une aiguille (14), et qui sont raccordés parallèlement entre eux aux bornes des moteurs (12, 23).
